# EUROPÄISCHE PATENTSCHRIFT

(11) **EP 1 181 789 B1**
(45) Veröffentlichungstag und Bekanntmachung des Hinweises auf die Patenterteilung: **07.12.2005**
(21) Anmeldenummer: 00943602.3
(22) Anmeldetag: 15.05.2000
(51) Int. Cl.: H04J 3/06

(54) **VERFAHREN ZUM ÜBERMITTELN VON HDLC-ORIENTIERTEN, BURSTARTIGEN DATEN ÜBER EINEN ÜBERTRAGUNGSKANAL**
METHOD OF TRANSMITTING HDLC-ORIENTED, BURST DATA VIA A TRANSMISSION CHANNEL
PROCEDE POUR LA TRANSMISSION DE DONNEES EN RAFALES ORIENTEES HDLC PAR L'INTERMEDIAIRE D'UN CANAL DE TRANSMISSION

(30) Priorität: 28.05.1999 DE 19924573
(43) Veröffentlichungstag der Anmeldung: 27.02.2002
(73) Patentinhaber: SIEMENS AKTIENGESELLSCHAFT, 80333 München (DE)
(72) Erfinder: KÖPPE, Tim, D-17493 Greifswald-Ladebow (DE)
(86) Internationale Anmeldenummer: PCT/DE2000/001535
(87) Internationale Veröffentlichungsnummer: WO 2000/074285

(56) Entgegenhaltungen:
- EP-A- 0 756 394
- BYCHOWSKY M ET AL: "SMART JITA DELAY ADJUSTMENT" MOTOROLA TECHNICAL DEVELOPMENTS, US, MOTOROLA INC. SCHAUMBURG, ILLINOIS, Bd. 28, 1. August 1996 (1996-08-01), Seiten 178-180, XP000638466

## Beschreibung

Für die gesicherte Übertragung von Daten zwischen Komponenten von Kommunikationseinrichtungen oder Kommunikationsnetzen wird häufig das HDLC-Datenübertragungsverfahren eingesetzt. Hierbei werden die HDLC-orientierten Daten über Übertragungskanäle übermittelt, wobei die Takte der zu übermittelnden HDLC-Daten und des Übertragungskanals meist unterschiedliche Takte verwenden oder nicht phasensynchron sind. Aufgrund dieser Differenzen kommt es zu Bitschlüpfen bzw. Bitfehlern.

Um diese Bitfehler zu vermeiden, wird üblicherweise zusammen mit den Daten ein Synchrontakt über eine Synchrontaktleitung übertragen, auf den der Takt der Übertragungsstrecke synchronisiert wird. Durch diese Synchronisierung des Taktes des Übertragungskanals wird ein Bitschlupf bzw. werden Bitfehler vermieden. Durch die Bereitstellung der Synchrontakte und der Synchrontaktleitungen steigt zum einen der schaltungstechnische Aufwand beispielsweise in Komponenten von Kommunikationseinrichtungen, d.h. Baugruppen, und die Übermittlung der Synchrontakte muß bei bidirektionalem Betrieb auf verschiedene Übermittlungsrichtungen umgesteuert werden.

Eine weitere Möglichkeit zur Übermittlung von HDLC-orientierten Daten über einen transparenten Ubertragungskanal ohne Synchronisation der Takte ist darin zu sehen, daß die Übertragungsrate des transparenten Übertragungskanals wesentlich höher als die Übertragungsrate der HDLC-orientierten Daten gewählt wird. Hierbei werden die zu übermittelnden bzw. in den transparenten Übertragungskanal einzufügenden HDLC-orientierten Daten mit der hohen Taktrate des Übertragungskanals abgetastet, d.h. überabgetastet und in den Übertragungskanal eingefügt. Dies bedeutet jedoch eine erheblich unter der möglichen Übertragungsrate effektiven Übertragungsrate, die insbesondere in zeitkritischen Kommunikationseinrichtungen nicht akzeptierbar ist.

Aus der Druckschrift Bychowsky M et al: "SMART JITA DELAY ADJUSTMENT" MOTOROLA Technical Developments, US, Motorola INC. SCHAUMBURG, ILLINOIS, Bd. 28, 1. August 1996 (1996-08-01), Seiten 178-180 ist ein iDEN-System bekannt, bei dem HDLC-Daten über ein PSTN-Netzwerk von einem Teilnehmer zu einem weiteren Teilnehmer übertragen werden. Hierbei werden nach der Übertragung der Beginn und das Ende der übermittelten und in einem Speicher zwischengespeicherten HDLC-Pakete festgestellt. Aus der Position des Auslösezeigers kann die durch die Übertragung verursachte zeitliche Verzögerung der HDLC-Pakete festgestellt werden.

Aus der EP-A-0 756 394 ist ein Verfahren und eine Anordnung zur Synchronisation von codierten und decodierten Daten bekannt, bei dem die Daten mit Hilfe von Übertragungsrahmen übermittelt werden. Nach der Übertragung, d.h. beim Empfänger, wird der Beginn des Übertragungsrahmens ermittelt und aus diesem ein für die Korrektur des Übertragungszeitpunktes, d.h. für die Synchronisation verwendetes Signal abgeleitet.

Die Aufgabe der Erfindung besteht darin, die Übermittlung von HDLC-orientierten, burstartigen Daten über transparente Übertragungskanäle zu vereinfachen. Die Aufgabe wird ausgehend von einem Verfahren zum Einfügen von burstartigen HDLC-orientierten Daten in einen transparenten Übertraguhgskanal gemäß den Merkmalen des Oberbegriffs des Patentanspruchs 1 durch dessen kennzeichnende Merkmale gelöst.

Der wesentliche Aspekt des erfindungsgemäßen Verfahrens ist darin zu sehen, daß der Beginn der HDLC-orientierten Daten ermittelt wird und die folgenden Daten mit der Taktrate des Übertragungskanals abgetastet und gemäß der Abtastung in den Übertragungskanal eingefügt werden. Diese einfache erfindungsgemäße Lösung ist möglich, da die HDLC-orientierten Daten burstartig mit üblichen Blocklängen von 100 bis 200 Bytes übermittelt werden und während der Übermittlung bzw. dem Einfügen der HDLC-orientierten Daten in den Übertragungskanal die Synchronisation beider Takte sich lediglich geringfügig ändert. Diese geringfügige Änderung kann in den meisten Anwendungsfällen toleriert werden. Ein wesentlicher Vorteil des erfindungsgemäßen Verfahrens ist darin zu sehen, daß auf eine synchrone Taktschnittstelle einschließlich der Übermittlung der synchronen Taktsignale verzichtet werden kann. Darüber hinaus wird der Verkabelungsaufwand für die elektrische Verbindung der Taktschnittstellen eingespart. Ein weiterer Vorteil des erfindungsgemäßen Verfahrens ist darin zu sehen, daß durch den Wegfall der Verkabelung bzw. der Taktschnittstelle die Möglichkeiten von Fehlkonfigurationen bei der Installation der Kommunikationseinheiten verringert werden. Des weiteren toleriert das erfindungsgemäße Verfahren eine hohe Taktasynchronität der Takte der zu übermittelnden HDLC-orientierten Daten und der Takte der Übertragungsstrecke. Bezüglich der Datenverzögerung zeichnet sich das erfindungsgemäße Verfahren durch geringe Durchlaufzeiten aus.

Gemäß einer vorteilhaften Weiterbildung des erfindungsgemäßen Verfahrens werden zwischen den burstartigen HDLC-Daten kontinuierlich Idle-Flags eingefügt und eine Synchronisierung der Takte mit Hilfe der Idle-Flags durchgeführt. Beim Einfügen der burstartigen Daten werden die während der Idle-Flags durchgeführte Synchronisierung der Takte verwendet - Anspruch 2. Hierbei wird der im HDLC-Übertragungsverfahren definierte Effekt zur Dauerlagenvermeidung verwendet, d.h. in regelmäßigen Abständen - beim HDLC-Übertragungsverfahren jedes siebte Bit - zur Synchronisierung der beiden Takte verwendet. Hierbei kann bei jedem siebten Bit eine Taktsynchronisierung bzw. eine Phasensynchronisierung des Taktes der HDLC-orientierten Daten und des Taktes des Übertragungskanals durchgeführt werden.

Gemäß einer weiteren Ausgestaltung des erfindungsgemäßen Verfahrens werden mit dem Ermitteln des Beginns der burstartigen HDLC-orientierten Daten diese mit ihrer Taktrate in einen, eine vorgegebene Bitrate aufweisenden Pufferspeicher kontinuierlich eingespeichert und die burstartigen HDLC-orientierten Daten mit der Taktrate des Übertragungskanals kontinuierlich ausgelesen - Anspruch 3. Diese Variante des erfindungsgemäßen Verfahrens ist insbesondere für Differenzen von Taktraten vorgesehen, die über eine Taktabweichung von einem Bit hinausgehen. Vorteilhaft wird das Auslesen der gespeicherten burstartigen HDLC-orientierten Daten begonnen, wenn der Pufferspeicher annähernd zur Hälfte gefüllt ist - Anspruch 4 und die Größe des Pufferspeichers wird auf die auftretenden Phasendifferenzen der beiden Takte abgestimmt - Anspruch 5. Die Größe des Pufferspeichers bestimmt zudem die Taktabweichung, die ausgeglichen werden kann.

Im folgenden wird das erfindungsgemäße Verfahren anhand eines Blockschaltbildes näher erläutert.

Das Blockschaltbild zeigt eine Kommunikationseinrichtung KE, die mit einem Übertragungskanal TC verbunden ist, wobei der Übertragungskanal TC durch eine Protokolleinrichtung HDLC-E realisiert ist. Die Verbindung weist zwei Leitungen L auf, wobei über eine Leitung L Daten d von der Kommunikationseinrichtung KE zum Übertragungskanal TC und über die andere Leitung Leitung L Daten d in entgegengesetzter Übertragungsrichtung übermittelt werden. Erfindungsgemäß werden die Daten d gemäß dem standardisierten HDLC-Übermittlungsprotoll HDLC übermittelt. HDLC-orientierte Daten d werden burstartig, d.h. in Paketen mit 50 bis 200 Bytes übermittelt. Zwischen der Datenüberübertragung werden Idle-Flags if übertragen. Bei der Idle-Flag-Übertragung wird, um elektrische Dauerlagen auf der Leitung L zu vermeiden, nach jedem sechsten, eine logische 0-Information repräsentierendes Bit und eine logische 1-Information repräsentierendes Bit eingefügt, d.h. jedes siebte Bit ist ein Bit mit einer logischen 1-Information - im Blockschaltbild durch die Bezeichnung (6+1) angedeutet. Sowohl in der Kommunikationseinrichtung KE als auch in der Protokolleinrichtung HDLC ist ein Empfänger E angeordnet, in dem die Idle-Flags if empfangen und aus der mit jedem siebten Bit übertragenen Information ein Empfangstakt ET abgeleitet wird. Dieser Empfangstakt ET synchronsiert den internen Takt IT, im Blockschaltbild durch die Bezeichnung ET―IT angedeutet.

Bei einer Übermittlung von burstartigen Daten d bzw. eines Paketes von Daten d wird im jeweiligen Empfänger E der Beginn der Daten d bzw. des Paketes von Daten d ermittelt und die darin enthaltenen Daten d werden mit dem internen Takt IT des Empfängers E abgetastet und dadurch taktgerecht empfangen. Die taktgerecht empfangenen Daten d' werden anschließend zur Übertragung über den Übertragungskanal TC weitergeleitet. Während des Empfangs der burstartigen Daten d wird der Empfangstakt ET nicht auf den internen Takt IT synchronisiert. Da die Zeitspanne für den Empfang der burstartigen Daten d bis zum Übermitteln der Idle-Flags gering ist - ca. 50 bis 150 Bits - bleibt die während der Übermittlung der Idle-Flags if Synchronisierung annähernd erhalten. Bei einer Übertragungsgeschwindigkeit von 64 kbit/s wird unter Berücksichtigung der SISA-Spezifikation des HDLC-Übermittlungsverfahrens HDLC eine maximale Taktabweichung von ca. 280 ppm auftreten.

Das vorhergehend beschriebene Verfahren ist für eine Übertragung von HDLC-orientierten Daten d geeignet, bei dem niedrige Taktdifferenzen - d.h. nicht größer als ein Bit Taktabweichung - zwischen dem Empfangstakt ET und dem internen Takt IT vorkommen. Ist mit großeren Taktdifferenzen zu rechnen, ist zur Zwischenspeicherung der übermittelten Daten d im Empfänger E in diesem ein Pufferspeicher PS vorzusehen - im Blockschaltbild durch ein mit PS bezeichnetes, strichliertes Rechteck angedeutet. Hierbei wird der von den im Empfänger E empfangenen Daten d abgeleitete Empfangs-Bittakt BT zum Einschreiben der Daten d in den Pufferspeicher PS verwendet. Ist der Pufferspeicher F5 annahernd zur Hälfte mit Daten d gefüllt, werden die im Pufferspeicher PS zwischengespeicherten Daten d, beginnend mit dem ersten eingelesenen Bit, mit internen Bittakt ausgelesen und an die Kommunikationseinrichtung KE bzw. den Übertragungskanal TC weitergeleitet. Die Größe des Pufferspeichers PS hangt von der maximalen Abweichung der Takte IT,ET und der maximalen Bitanzahl eines Bursts ab, d.h. ist in Abhangigkeit von diesen beiden Parametern zu dimensionieren.

Die Erfindung ist nicht auf das Ausführungsbeispiel beschränkt, sondern kann in allen Kommunikationseinrichtungen eingesetzt werden, an die ein Übertragungskanal, d.h. eine Übertragungseinrichtung oder eine Übertragungsstrecke angeschlossen ist und über die burstartige, HDLC-orientierte Daten d übertragen werden.

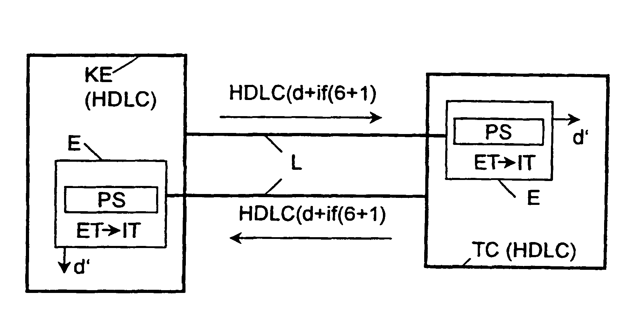

## Patentansprüche

1. Verfahren zum Einfügen von burstartigen HDLC-orientierten Daten (d) in einen transparenten Übertragungskanal (TC), wobei die Takte (ET) der HDLC-orientierten Daten (ET) und des Übertragungskanals (TC) nicht synchronisiert sind,
bei dem vor dem Einfügen der burstartigen HDLC-orientierten Daten in den transparenten Übertragungskanal (TC) der Beginn der HDLC-orientierten Daten (d) ermittelt und die folgenden Daten mit der Taktrate (IT) des Übertragungskanals (TC) abgetastet werden.
**dadurch gekennzeichnet,**
**daß** mit dem Ermitteln des Beginns der burst-artigen HDLC-orientierten Daten (d) diese mit ihrer Taktrate in einen, eine vorgegebene Bitbreite aufweisenden Pufferspeicher (PS) kontinuierlich gespeichert werden, und daß die burstartigen HDLC-orientierten Daten (d) mit der Taktrate (IT) des Übertragungskanals (TC) kontinuierlich ausgelesen werden.

2. Verfahren nach Anspruch 1, **dadurch gekennzeichnet, daß** zwischen den burstartigen HDLC-Daten (d) kontinuierlich Idle-Flags (if) eingefügt werden, daß eine Synchronisierung der Takte (ET,IT) mit Hilfe der Idle-Flags (if) durchgeführt wird, und daß beim Einfügen der burstartigen Daten (d) die während der Idle-Flags (if) durchgeführte Synchronisierung der Takte (ET,IT) verwendet wird.

3. Verfahren nach Anspruch 1 oder 2, **dadurch gekennzeichnet, daß** das Auslesen der gespeicherten burstartigen HDLC-orientierten Daten (d) begonnen wird, wenn der Pufferspeicher (PS) annähernd zur Hälfte gefüllt ist.

4. Verfahren nach Anspruch 2 oder 3, **dadurch gekennzeichnet, daß** die Größe das Pufferspeichers (PS) auf die auftretenden Phasendifferenzen der beiden Takte (ET,IT) abgestimmt ist.

## Claims

1. Method for inserting HDLC-oriented burst data (d) into a transparent transmission channel (TC), the pulses (ET) of the HDLC-oriented data (ET) and of the transmission channel (TC) not being synchronised,
whereby before inserting the HDLC-oriented burst data into the transmission channel (TC) the start of the HDLC-oriented data (d) is determined and the successive data is sampled at the pulse rate (IT) of the transmission channel,
**characterised in that**
when the start of the HDLC-oriented burst data (d) is determined this is continuously stored at its pulse rate in a buffer storage (PS) having a predetermined bit width, and that the HDLC-oriented burst data (d) is continuously read out at the pulse rate (IT) of the transmission channel (TC).

2. Method according to Claim 1, **characterised in that** idle flags (if) are continuously inserted between the HDLC burst data (d), that the pulses (ET, IT) are synchronised with the help of the idle flags (if), and that when inserting the burst data (d) the synchronisation of the pulses (ET, IT) performed during the idle flags (if) is used.

3. Method according to Claim 1 or 2, **characterised in that** the read-out of the stored HDLC-oriented burst data (d) is started when the buffer storage (PS) is approximately half-full.

4. Method according to Claim 2 or 3, **characterised in that** the size of the buffer storage (PS) is aligned with the phase differences of the two pulses (ET, IT) which occur.

## Revendications

1. Procédé pour insérer des données en rafales orientées HDLC (d) dans un canal de transmission transparent (TC), les cycles (ET) des données orientées HDLC (ET) et du canal de transmission (TC) n'étant pas synchronisés, dans lequel, avant l'insertion des données en rafales orientées HDLC dans le canal de transmission transparent (TC), il est procédé à la détermination du début des données orientées HDLC (d) et à l'échantillonnage des données suivantes avec la cadence (IT) du canal de transmission (TC),
**caractérisé en ce que**,
avec la détermination du début des données en rafales orientées HDLC (d), celles-ci sont mises en mémoire en continu avec leur cadence dans une mémoire tampon (PS) qui présente une largeur de bit donnée et **en ce que** les données en rafales orientées HDLC (d) sont lues en continu avec la cadence (IT) du canal de transmission.

2. Procédé selon la revendication 1, **caractérisé en ce que** des «idle flags» (if) sont insérés en continu entre les données HDLC en rafales (d), **en ce qu'**une synchronisation des cycles (ET, IT) est effectuée à l'aide des «idle flags» (if) et **en ce qu'**est utilisée, lors de l'insertion des données en rafales (d), la synchronisation des cycles (ET, IT) effectuée pendant les «idle flags» (if).

3. Procédé selon la revendication 1 ou 2, **caractérisé en ce que** la lecture des données en rafales orientées HDLC (d) qui ont été mises en mémoire, commence lorsque la mémoire tampon (PS) est remplie approximativement de moitié.

4. Procédé selon la revendication 2 ou 3, **caractérisé en ce que** la taille de la mémoire tampon (PS) est accordée aux différences de phase des deux cycles (ET, IT)qui surviennent.
